Europäisches Patentamt

European Patent Office

Office européen des brevets

(19)

(11) Veröffentlichungsnummer : **0 120 833**
**B1**

(12) # EUROPÄISCHE PATENTSCHRIFT

(45) Veröffentlichungstag der Patentschrift :
**12.11.86**

(21) Anmeldenummer : **84890021.3**

(22) Anmeldetag : **24.01.84**

(51) Int. Cl.⁴ : **C 08 K   3/36**, C 08 L 23/22,
**B 60 C   1/00**

(54) **Gummimischung für Luftschläuche von Luftreifen.**

(30) Priorität : **25.03.83 AT 1061/83**

(43) Veröffentlichungstag der Anmeldung :
**03.10.84 Patentblatt 84/40**

(45) Bekanntmachung des Hinweises auf die Patenterteilung : **12.11.86 Patentblatt 86/46**

(84) Benannte Vertragsstaaten :
**AT CH DE LI SE**

(56) Entgegenhaltungen :
**KAUTSCHUK UND GUMMI, Band 6, Nr. 10, Oktober 1953,Seiten WT205-210, Heidelberg, DE; O.GRÜNFELD:"Kieselkreide und ihre Stellung in der Gummi-Industrie"**

(73) Patentinhaber : **Semperit Reifen Aktiengesellschaft
Modecenterstrasse 22
1030 Wien (AT)**

(72) Erfinder : **Fuhrmann, Erich
Am Hang 13
A-2500 Baden (AT)**

EP 0 120 833 B1

## Beschreibung

Die vorliegende Erfindung betrifft eine Gummimischung für Luftschläuche von Luftreifen, insbesondere Fahrradreifen.

Während Luftschläuche in früherer Zeit aus Naturkautschuk hergestellt wurden, der ein relativ schlechtes Lufthaltevermögen besitzt, ist man seit der Entwicklung von Butylkautschuk und seinen Derivaten auf Verwendung dieser Kautschuktypen zur Herstellung von Luftschläuchen übergegangen. Butylkautschuke und insbesondere Halobutylkautschuke besitzen ein ausgezeichnetes Lufthaltevermögen, was dadurch zum Ausdruck kommt, daß ein Luftnachpumpen nur relativ selten erforderlich ist.

Es ist in der Kautschuktechnologie üblich, ruß als sogenannten Verstärkerfüllstoff zuzusetzen. Erst durch diesen Verstärkerfüllstoff enthält der Gummi die guten mechanischen Eigenschaften. Entsprechend gehörte es auch zum Stand der Technik, Luftschläuche aus Halobutylkautschuk zu fertigen, der mit Ruß verstärkt ist. Durch diese rußverstärkung ergibt sich automatisch eine schwarze Farbe des Luftschlauches.

Es bestand nun seit langem der Wunsch, Lutschläuche auch in andersfarbiger Ausführung herstellen zu können, dieser Wunsch scheiterte jedoch bisher daran, daß man keine geeigneten hellen Verstärkerfüllstoffe zur Verfügung hatte. Unter « geeignet » ist hier zu verstehen, daß durch die Beigabe eines hellen Verstärkerfüllstoffes anstelle von Ruß trotzdem das Eigenschaftsniveau von rußgefüllten Mischungen erhalten bleiben kann.

Insbesondere wurde versucht, anstelle des Rußes Kieselsäure als Füllstoff zu verwenden. Kieselsäure wird üblicherweise in der Kautschuktechnologie zur Herstellung heller Mischungen verwendet, die für den Einsatzzweck in Luftschläuchen aber nicht befriedigen, weil Kieselsäure eine große Hygroskopie aufweist. Dies bedeutet, daß gemeinsam mit der Kieselsäure immer bedeutende Mengen an Wasser in die Mischung gelangen, die bei der Vulkanisation zur Porenbildung des Gummis führen. Ein derartiger Luftschlauch besitzt dann kein befriedigendes Lufthaltevermögen.

Ziel der vorliegenden Erfindung war daher die Schaffung einer hellen Gummimischung für Luftschläuche, wobei sichergestellt werden sollte, daß bei der Vulkanisation keine das Lufthaltevermögen beeinträchtigende Porenbildung eintreten kann.

Dies wird erfindungsgemäß bei einer Gummimischung erreicht, die polymermäßig aus einem mit Naturkautschuk verschnittenen Halobutylkautschuk besteht und als Verstärkerfüllstoff Neuburger Kieselerde enthält.

Neuburger Kieselerde ist das Verwitterungsprodukt eines feldspathaltigen Gesteins, das durch Sedimentmetamorphose zu einem außerordentlich feinkörnigen Material umgebildet worden ist (siehe Ullmann's Enzyklopädie der Technischen Chemie, 3. Auflage, 13. Band, Seite 820 bis 821).

Neuburger Kieselerde besteht zu etwa 70 bis 75 % aus Quarz ($SiO_2$) und 25 bis 30 % aus Kaolinit [$Al_4(OH)_8Si_4O_{10}$].

Beide Bestandteile liegen in großer Reinheit und Feinheit vor. Das Besondere ist, daß die rundlichen Quarzteilchen (Durchmesser 0,1 bis 0,5 $\mu m$) zwischen die blättchenförmigen Kaolinitteilchen (Durchmesser 0,1 bis 0,8 $\mu m$, Dicke 0,02 $\mu m$) eingelagert sind, sodaß sich eine sehr hohe spezifische Oberfläche ergibt.

Es ist grundsätzlich bekannt, Neuburger Kieselerde als Füllstoff in der Kautschukindustrie zu verwenden. Und zwar hat man diesen Füllstoff immer dann verwendet, wenn es galt, helle Mischungen herzustellen, die dennoch eine hervorragende mechanische Festigkeit aufweisen sollten, wobei außerdem auch eine optimal homogene Verteilung im Kautschuk erreicht sein soll. Die Neuburger Kieselerde besitzt nämlich aufgrund ihrer Struktur eines « aufgelockerten Haufwerks » den großen Vorteil, daß sie sich besonders leicht und schnell einmischen und verteilen läßt. Sie begünstigt dadurch auch die Einmischbarkeit anderer, sonst im Kautschuk schwer verteilbarer Stoffe. Keine Rolle spielte bei der bisherigen Verwendung von Neuburger Kieselerde der Umstand, daß diese im Gegensatz zu üblichen Kieselsäurepigmenten nicht hygroskopisch ist. Gerade dieser Umstand ist aber für die vorliegende Verwendung ausschlaggebend, da er sicherstellt, daß bei der Vulkanisation ein kompakter Gummikörper erhalten wird, sodaß das vom Polymertyp her vorhandene ausgezeichnete Lufthaltevermögen von Halobutylkautschuken voll erhalten bleibt.

Trotz der bekannten Verwendung von Neuburger Kieselerde als Füllstoff für diverse Kautschuktypen lag es daher für die vorliegende Aufgabenstellung nicht nahe, Neuburger Kieselerde zu verwenden.

Bisher stand man nämlich vor der Alternative der Herstellung von schwarzen, rußgefüllten Schläuchen mit hoher Lufthaltbarkeit und guten physikalischen und mechanischen Eigenschaften oder von hellfarbigen Schläuchen mit sehr geringer Lufthaltbarkeit und relativ schlechten physikalischen und mechanischen Eigenschaften.

Gemäß einer bevorzugten Ausführungsform der Erfindung besteht der Polymerverschnitt zu 20 bis 40 Gewichts.-%, vorzugsweise 30 bis 40 Gewichts.-%, aus Halobutylkautschuk und bis 20 Gewichts.-%, vorzugsweise 10 bis 20 Gewichts.-%, aus Naturkautschuk, wobei der Anteil an Neuburger Kieselerde 30 bis 50 Gewichts.-% beträgt.

Eine derartige Mischung ist besonders gut geeignet zur Herstellung von Luftschläuchen für Fahrradreifen. Derartige Luftschläuche werden dadurch hergestellt, daß die Rohmischung schlauchförmig extrudiert und Abschnitte dieses endlosen Rohschlauches zu in sich geschlossenen rohen Luftschläuchen verbunden werden.

Neben den Polymer- und Füllstoffanteilen enthält die Rohgummimischung noch Farbstoffe, Öle, Verarbeitungshilfsmittel und Weichmacher, Harze, Lichtschutzwachs, Dispergatoren, Aktivatoren sowie das Vulkanisationssystem. Als Vulkanisationssystem für Halobutylkautschuk können beispielsweise synergistische Zusammensetzungen von Mercaptobenzthiazolsulfenamid, Tetramethylthiuramdisulfid und Schwefel sowie Verzögerer verwendet werden.

Der Zusatz von höheren Anteilen Naturkautschuk führt zu einer Erhöhung der Elastizität der Mischung, was in manchen Fällen gewünscht ist.

Es hat sich für die vorliegenden Erfindung zweckmäßig herausgestellt, daß ein Typ der Neuburger Kieselerde verwendet wird, der zu etwa 73 % aus Quarz und zu etwa 27 % aus Kaolinit besteht.

Die Neuburger Kieselerde wird unter der Markenbezeichnung Sillitin von der Firma Hoffmann Mineral G.m.b.H., BRD, in verschiedenen Typen angeboten, welche sich insbesondere durch unterschiedliche mineralogische Analysen unterscheiden. Für die vorliegende Erfindung hat sich die Verwendung von Sillitin N 85 weiß mit einem Quarzanteil von 73 % und einem Kaolinitanteil von 27 % als besonders vorteilhaft erwiesen.

## Patentansprüche

1. Gummimischung für Luftschläuche von Luftreifen, insbesondere Fahrradreifen, dadurch gekennzeichnet, daß sie polymermäßig aus einem mit Naturkautschuk verschnittenen Halobutylkautschuk besteht und als Verstärkerfüllstoff Neuburger Kieselerde enthält.

2. Gummimischung nach Anspruch 1, dadurch gekennzeichnet, daß der Polymerverschnitt zu 20 bis 40 Gewichts-%, vorzugsweise 30 bis 40 Gewichts-%, aus Halobutylkautschuk und bis 20 Gewichts-%, vorzugsweise 10 bis 20 Gewichts-%, aus Naturkautschuk besteht, wobei der Anteil an Neuburger Kieselerde 30 bis 50 Gewichts-% beträgt.

3. Gummimischung nach Anspruch 1 oder 2, dadurch gekennzeichnet, daß ein Typ Neuburger Kieselerde verwendet wird, der zu etwa 73 % aus Quarz und zu etwa 27 % aus Kaolinit besteht.

## Claims

1. A rubber mixture for the inner tubes of pneumatic tyres, in particular bicycle tyres, characterised in that the polymer thereof consists of a halobutyl rubber blended with natural rubber and contains Neuburger silica as reinforcing filler.

2. A rubber mixture as claimed in Claim 1, characterised in that the polymer blend consists 20 to 40 weight %, preferably 30 to 40 weight %, of halobutyl rubber and up to 20 weight %, preferably 10 to 20 weight % of natural rubber, the proportion of Neuburger silica being 30 to 50 weight %.

3. A rubber mixture as claimed in Claim 1 or Claim 2, characterised in that a type of Neuburger silica is used which consists of approximately 73 % quartz and approximately 27 % kaolinite.

## Revendications

1. Mélange de caoutchouc pour chambres à air de pneumatiques, notamment de pneumatiques pour bicyclettes, caractérisé en ce qu'il consiste du point de vue polymère en un caoutchouc naturel coupé de caoutchouc butylique halogéné et contient en tant que matière de charge de renforcement de la silice de Neuburg.

2. Mélange de caoutchouc selon la revendication 1, caractérisé en ce que le mélange polymère consiste pour 20 à 40 % en poids, de préférence 30 à 40 % en poids de caoutchouc butylique halogéné et pour jusqu'à 20 % en poids, de préférence 10 à 20 % en poids de caoutchouc naturel, la proportion en silice de Neuburg étant de 30 à 50 % en poids.

3. Mélange de caoutchouc selon la revendication 1 ou 2, caractérisé en ce que l'on utilise un type de silice de Neuburg, consistant pour jusqu'à environ 73 % de quartz et pour jusqu'à environ 27 % de kaolinite.